(19) Europäisches Patentamt
European Patent Office
Office européen des brevets

(11) **EP 3 620 270 B1**

(12) **EUROPEAN PATENT SPECIFICATION**

(45) Date of publication and mention
of the grant of the patent:
**16.07.2025 Bulletin 2025/29**

(21) Application number: **18192336.8**

(22) Date of filing: **04.09.2018**

(51) International Patent Classification (IPC):
**G05B 19/404** *(2006.01)*      **B25J 9/16** *(2006.01)*

(52) Cooperative Patent Classification (CPC):
**B25J 9/1692; G05B 19/404;** G05B 2219/33257;
G05B 2219/33271; G05B 2219/39022;
G05B 2219/50296

(54) **METHOD AND CONTROL UNIT FOR CONTROLLING AN ASSEMBLY ROBOT**

SYSTEM, VERFAHREN UND STEUERUNGSEINHEIT ZUR STEUERUNG EINES MONTAGEROBOTERS

PROCÉDÉ ET UNITÉ DE COMMANDE POUR COMMANDER UN ROBOT D'ASSEMBLAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.03.2020 Bulletin 2020/11**

(73) Proprietor: **Bayerische Motoren Werke
Aktiengesellschaft
80809 München (DE)**

(72) Inventor: **Park, Chulhun
Greer, SC 29651 (US)**

(56) References cited:
EP-A2- 2 767 370          CN-A- 108 122 257
US-A1- 2007 075 048       US-A1- 2014 257 542

• JAYAWEERA ET AL: "Adaptive robotic assembly of compliant aero-structure components", ROBOTICS AND COMPUTER INTEGRATED MANUFACTURING, ELSEVIER SCIENCE PUBLISHERS BV., BARKING, GB, vol. 23, no. 2, 4 January 2007 (2007-01-04), pages 180 - 194, XP005821825, ISSN: 0736-5845, DOI: 10.1016/ J.RCIM.2006.04.002

## Description

The present document is directed at the control of a robot-assisted assembly process, e.g. for the assembly of vehicles. In particular, the present document is directed at increasing the assembling precision of such an assembly process. Vehicles, notably cars, are typically assembled within an assembly line using one or more robots. A robot may be configured to grab a part, e.g. a door, which is to be attached to the body of a vehicle. Furthermore, the robot may be configured to place the part in a particular pose relative to the body of the vehicle. Another robot may be used to fix (e.g. to screw) the part onto the body of the vehicle. In this way, several different parts may be fixed to the body of a vehicle, in order to assemble the vehicle.

During the operation of an assembly line, the pose of a particular part on the body of different vehicles may over time drift away from a target pose. Such offsets from a target pose may be caused by part variations of parts (provided e.g. by a separate supplier), mechanical tolerances within the assembly line, notably by mechanical tolerances of an assembly robot, mechanical tolerances of an end-of-arm gripper frame and tooling variation over time and/or of a camera used for controlling the positioning process.

EP 2 767 370 A1 describes a method for calibrating a robot system, in order to enable the robot system to grab a workpiece. US 2014/257542 A1 describes a method for positioning error compensation during manufacturing of complex-shaped gas turbine engine parts. Academic publication titled "Adaptive robotic assembly of compliant aero-structure components" by Jayaweera N. and Webb P. in Robotics and Computer-Integrated Manufacturing April 2007 Elsevier Ltd refers to the problem of compliance of the components in robotic assembly tasks.

The present document is directed at the technical problem of increasing the precision, with which parts are mounted to the body of a product, notably a vehicle, within an assembly line.

According to an aspect a method for controlling an assembly step of a part onto a body of a product, which is performed by a robot, is described. The method comprises determining deviation data at a plurality of measurement points of an already assembled part, wherein the deviation data indicates for each measurement point a deviation in a measurement direction from a target position of the measurement point. Furthermore, the method comprises determining offset data based on the deviation data and based on a transformation matrix for the plurality of measurement points and the plurality of measurement directions. In addition, the method comprises adjusting operation of the robot for assembling a subsequent part based on the offset data, in order to reduce the deviation for at least one of the measurement points.

According to a further aspect, a control unit for controlling an assembly robot which is configured to attach a part onto a body of a product is described. The control unit is configured to determine deviation data at a plurality of measurement points of an already assembled part, wherein the deviation data indicates for each measurement point a deviation in a measurement direction from a target position of the measurement point. Furthermore, the control unit is configured to determine offset data based on the deviation data and based on a transformation matrix for the plurality of measurement points and the plurality of measurement directions. In addition, the control unit is configured to adjust operation of the robot for assembling a subsequent part based on the offset data, such that the deviation for at least one of the measurement points is reduced (for the subsequent part, compared to the already assembled part).

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein

Figure 1a shows an example body of a vehicle;
Figure 1b illustrates an example assembly process for attaching a door to the body of a vehicle;
Figure 1c shows measurement devices for measuring the pose of a door at the body of a vehicle; and
Figure 2 shows a flow chart of an example method for controlling an assembly process.

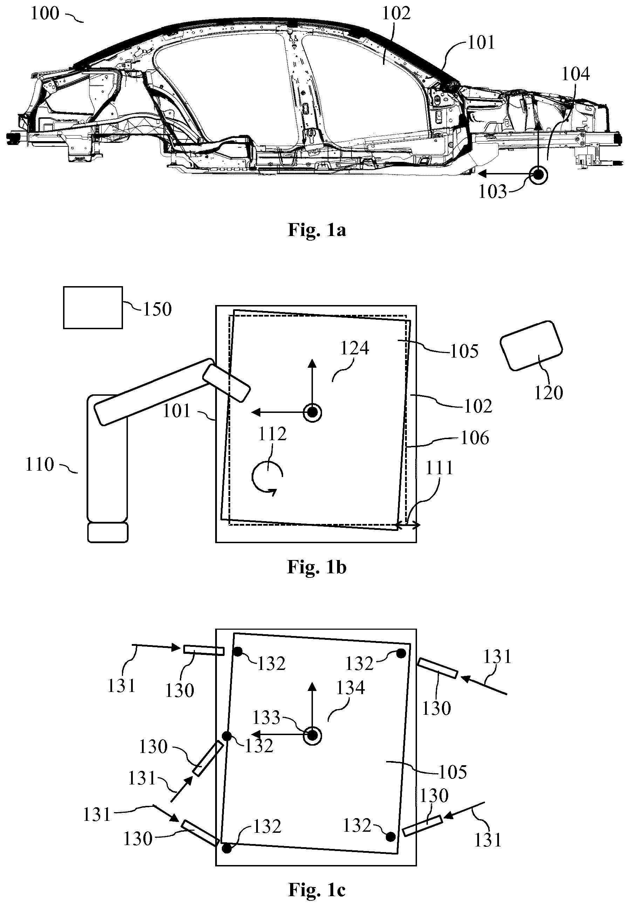

As outlined in the introductory section, the present document is directed at increasing the assembling precision of an assembly line and/or at maintaining a high level of assembling precision for an assembly line. In this context, Fig. 1a shows the body 101 of a vehicle 100, notably of a car, as an example for a general product which is assembled within an assembly line. Typically, an assembly line is used for assembling a sequence (e.g. thousands) of different vehicles 100 (which are at least partially identical to one another and/or which are of the same type).

Furthermore, Fig. 1a highlights a place 102 within the body 101, where a particular part (e.g. a door) is to be fixed to the body 101 within the assembly line. In addition, Fig. 1a shows a vehicle coordinate system 104 which is positioned at a vehicle reference point 103. The vehicle reference point 103 may be the center of the front axis of the vehicle 100. The vehicle coordinate system 104 may comprise an x-axis (pointing from the front to the back of the vehicle 100), a y-axis (pointing from the left to the right of the vehicle 100) and a z-axis (pointing from the bottom to the top of the vehicle 100).

Fig 1b shows an excerpt of an assembly line. In particular, Fig. 1b illustrates a robot 110 which is configured to position and/or to fix a part 105 (notably a door) at a particular place 102 within the body 101 of the vehicle 100. The part 105 may be fixed within an actual pose that is offset with regards to a target pose 106 for the part 105. In particular, the actual pose may be rotated 112 and/or translated 111 with regards to the target pose 106. Hence, the offset between the actual pose and the target pose 106 may comprise K = 6 components or degrees of freedom, notably three components for the rotation 112 and three components 111 for the translation.

The assembly step of the robot 110 may be supervised and/or guided by data provided by one or more assembly sensors 120 (notably one or more cameras). The one or more assembly sensors 120 and/or the robot 110 may use an assembly coordinate system 124 which may deviate in an undetermined manner from the vehicle coordinate system 104 (e.g. due to mispositioning of the body 101 of the vehicle 100 relative to the robot 110). Such a mismatch between the coordinate systems 104, 124 may cause an offset between the actual pose and the target pose 106 of a part 105. Further reasons for an offset between the actual pose and the target pose 106 of an assembled part 105 may be mechanical tolerances of the robot 110 and/or of the orientation and/or position of the one or more assembly sensors 120.

The actual pose of an assembled part 105 may be controlled using CMM (coordinate measuring machine) measurements. This is illustrated in Fig. 1c. A plurality of measurement devices 130 may be used to measure a deviation of a particular measurement point 132 from a target position (wherein the target position of a particular measurement point 132 is defined by the target pose 106 for the assembled part 105). A measurement device 130 may be configured to determine the deviation of a measurement point 132 within a particular measurement direction 131 (which may be described e.g. by a three-dimensional vector). By way of example, a measurement device 130 may be configured to determine the deviation of a measurement point 132 using a laser, or radar or a movable needle.

Hence, using a plurality of measurement devices 130 for a plurality of different measurement points 132, which are positioned on the assembled part 105 (wherein the plurality of measurement devices 130 may exhibit different measurement directions 131), the actual pose of the assembled part 105 may be determined in a precise manner. This measurement data, i.e. the (scalar) deviations measured by the plurality of measurement devices 130, may be used to adjust the operation of the robot 110, in order to improve the assembling precision of a part 105 which is handled subsequently by the robot 110.

As indicated above, the offset between the actual pose and the target pose 106 of an assembled part 105 may comprise a rotation 112. Such a rotation can typically not be described in a precise manner relative to the the vehicle coordinate system 104 and/or relative to the vehicle reference point 103 (due to the relatively large distance between the assembled part 105 and the vehicle reference point 103). In view of this, a part coordinate system 134 relative to a part reference point 133 may be defined. The part reference point 133 may correspond to a center point (e.g. to a center of gravity) of the assembled part 105. The part coordinate system 134 may have preferably the same orientation as the vehicle coordinate system 104. Hence, coordinates within the vehicle coordinate system 104 may be transformed into the part coordinate system 134 using a fixed (three-dimensional) coordinate offset. The measurement points 132 may be described within the part coordinate system 134, thereby allowing the pose offset between the actual pose and the target pose 106 to be determined in a precise and efficient manner.

In the following, it is outlined how the pose offset may be determined based on the measurement data using a transformation, notably a Jacobian, matrix which is dependent on the location of the measurement points 132 and on the measurement directions 131 of the measurement devices 130. The transformation matrix, notably an inverse of the transformation matrix, may be used to transform the deviations which are provided by the measurement devices 130 into a (six-dimensional) pose offset P. The pose offset P may then be used to adjust the operation of the robot 110. By making use of a transformation matrix which depends on all available measurement points 132 and all available measurement directions 131, the pose offset P may be determined in a precise manner.

It can be shown that for relatively small translations, the (translational) offset can be described as

$$\begin{bmatrix} \Delta x \\ \Delta y \\ \Delta z \end{bmatrix} = \begin{bmatrix} 1 \\ 0 \\ 0 \end{bmatrix} \Delta x + \begin{bmatrix} 0 \\ 1 \\ 0 \end{bmatrix} \Delta y + \begin{bmatrix} 0 \\ 0 \\ 1 \end{bmatrix} \Delta z$$

wherein the partial deviations may be given by

$$\frac{\partial f}{\partial x} = \begin{bmatrix} 1 \\ 0 \\ 0 \end{bmatrix}, \ \frac{\partial f}{\partial y} = \begin{bmatrix} 0 \\ 1 \\ 0 \end{bmatrix}, \ \frac{\partial f}{\partial z} = \begin{bmatrix} 0 \\ 0 \\ 1 \end{bmatrix}.$$

In a similar manner, the (rotational) offset for a relatively small rotation may be given by

$$\Delta_{rot} = \frac{\partial}{\partial rx} \cdot \Delta rx + \frac{\partial}{\partial ry} \cdot \Delta ry + \frac{\partial}{\partial rz} \cdot \Delta rz$$

$$= \left( \begin{bmatrix} 1 \\ 0 \\ 0 \end{bmatrix} \times \begin{bmatrix} x \\ y \\ z \end{bmatrix} \right) \Delta rx + \left( \begin{bmatrix} 0 \\ 1 \\ 0 \end{bmatrix} \times \begin{bmatrix} x \\ y \\ z \end{bmatrix} \right) \Delta ry + \left( \begin{bmatrix} 0 \\ 0 \\ 1 \end{bmatrix} \times \begin{bmatrix} x \\ y \\ z \end{bmatrix} \right) \Delta rz$$

wherein $\times$ denotes the cross-product operation, and wherein the vector $[x,y,z]^T$ denotes the position of a measurement point 132 of a measurement device 130.

As outlined above, a measurement device 130 typically only provides a (scalar) deviation measurement within one particular measurement direction 131. In view of this, the Jacobian component should be projected onto the respective measurement direction 131, as shown in the following equations:

$$\frac{\partial}{\partial x} = \begin{bmatrix} 1 \\ 0 \\ 0 \end{bmatrix} \circ \begin{bmatrix} V_x \\ V_y \\ V_z \end{bmatrix}, \quad \frac{\partial}{\partial y} = \begin{bmatrix} 0 \\ 1 \\ 0 \end{bmatrix} \circ \begin{bmatrix} V_x \\ V_y \\ V_z \end{bmatrix}, \quad \frac{\partial}{\partial z} = \begin{bmatrix} 0 \\ 0 \\ 1 \end{bmatrix} \circ \begin{bmatrix} V_x \\ V_y \\ V_z \end{bmatrix},$$

$$\frac{\partial}{\partial rx} = \left( \begin{bmatrix} 1 \\ 0 \\ 0 \end{bmatrix} \times \begin{bmatrix} x \\ y \\ z \end{bmatrix} \right) \circ \begin{bmatrix} V_x \\ V_y \\ V_z \end{bmatrix}, \quad \frac{\partial}{\partial ry} = \left( \begin{bmatrix} 0 \\ 1 \\ 0 \end{bmatrix} \times \begin{bmatrix} x \\ y \\ z \end{bmatrix} \right) \circ \begin{bmatrix} V_x \\ V_y \\ V_z \end{bmatrix}, \quad \frac{\partial}{\partial rz} = \left( \begin{bmatrix} 0 \\ 0 \\ 1 \end{bmatrix} \times \begin{bmatrix} x \\ y \\ z \end{bmatrix} \right) \circ \begin{bmatrix} V_x \\ V_y \\ V_z \end{bmatrix}$$

wherein $\begin{bmatrix} V_x \\ V_y \\ V_z \end{bmatrix}$ is a vector indicative of the measurement direction 131 of a measurement device 130 and wherein $\circ$ is the projection operator.

Using the above mentioned formula, a partial transformation and/or Jacobian matrix $J_n$ may be determined for each measurement device 130, using the coordinates $\begin{bmatrix} x \\ y \\ z \end{bmatrix}$ of the measurement point 132 of the measurement device 130. The coordinates may be given relative to the part reference point 133. For $n = 1, ..., N$ measurement devices 130, $N$ Jacobian matrices $J_n$ may be determined. Furthermore, the $N$ Jacobian matrices $J_n$ may be projected onto the measurement directions 131 of the respective measurement devices 130 using the respective direction vectors $V_n = \begin{bmatrix} V_{x,n} \\ V_{y,n} \\ V_{z,n} \end{bmatrix}$ describing the respective measurement direction 131, using $C_n^T = V_n^T J_n$. The transformation and/or Jacobian matrix $J$ which may be used for transforming the $N$ dimensional vector of the scalar deviations $d_n$ of the $N$ measurement devices 130, i.e. $D = [d_1, ..., d_N]^T$, may be determined as $J = \begin{bmatrix} C_1^T \\ \vdots \\ C_N^T \end{bmatrix}$. This transformation and/or Jacobian matrix $J$ may be inversed using a known inversion method to provide a (pseudo) inverse matrix $J^{-1}$. The pose offset $P = [\Delta x, \Delta y, \Delta z, \Delta rx, \Delta ry, \Delta rz]^T$ may then be determined as

$$P = J^{-1}D.$$

The (pseudo) inverse matrix $J^{-1}$ for a particular type of part 105 may be determined in advance. Typically, different types of parts 105 have different (pseudo) inverse matrices $J^{-1}$.

The pose offset P may be used to adjust the assembly process, notably the operation of the robot 110, in order to ensure that the actual pose of an assembled part 105 is within a given tolerance band around the target pose 106 for the part 105.

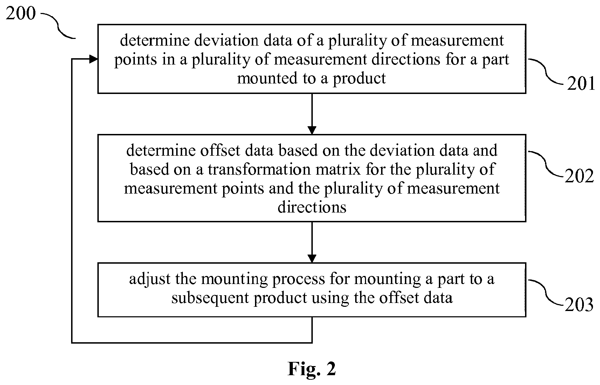

Fig. 2 shows a flow chart of an example method 200 for controlling an assembly step of a part 105 onto the body 101 of a product 100 (notably of a vehicle or a component of a vehicle), wherein the assembly step is performed by one or more robots 110. The method 200 may be performed by a control unit 150 for controlling the one or more robots 110 (see Fig. 1b). The method 200 may be used to increase the quality of an assembly process. Alternatively or in addition, the method 200 may be used to control the supply quality of a particular part 105 (which may be provided by a particular supplier). The offset data which is determined in the context of method 200 may be used to reduce variations of a particular part 105. For this purpose, the offset data may be provided to the supplier of the particular part 105.

The method 200 comprises determining 201 deviation data at a plurality of measurement points 132 of an already assembled part 105. The deviation data may comprise coordinate measuring machine (CMM) measurement data. In particular, the deviation data may indicate for each measurement point 132 a (scalar) deviation $d_n$ in a measurement direction 131 from a target position of the measurement point 132. In other words, for each measurement point 132, it may be indicated how much the measurement point 132 deviates from a target position of the measurement point 132. The deviation may be indicated for the measurement direction 131 of the measurement device 130 which is measuring the deviation.

The measurement directions 131 may at least partially differ for the different measurement points 132. By using different measurement directions 131 different degrees of freedom of a pose offset may be determined. In particular $K$ different measurements with $K$ different degrees of freedom may be used for determining a pose offset $P$ with $K$ degrees of freedom.

Furthermore, the method 200 comprises determining 202 offset data based on the deviation data and based on a transformation matrix for the plurality of measurement points 133 and the plurality of measurement directions 131. The transformation matrix may comprise or may depend on a Jacobian matrix (with partial deviations with regards to the different degrees of freedom of the pose offset). In particular, the transformation matrix may be configured to determine the deviation $d_n$ in a measurement direction 131 at a measurement point 132, which is caused by a pose offset $P$ of the part 105 relative to the target pose 106 of the part 105. The target position of the measurement point 132 typically dependents on the target pose. Typically, the transformation matrix is dependent on coordinates $Q_n$ of the plurality of measurement points 132 and on the plurality of measurement directions 131.

In addition, the method 200 comprises adjusting 203 operation of the robot 110 for assembling a subsequent part 105 (of a subsequent product 100) based on the offset data, in order to reduce the deviation for at least one of the measurement points 132 (for the subsequent part 105). The subsequent part 105 may be fixed to the body 101 of a subsequent product 100 of the same product type as the previously assembled product 100. Adjusting 203 the operation of the robot 110 may comprise adjusting a movement trajectory of the robot 110 when assembling a part 105, and/or adjusting, notably rotating and/or translating, a coordinate system 124 used by the robot 110 when assembling a part 105.

By making use of a transformation matrix which takes into account the position of the different measurement points 132 and the different measurement directions 131, offset data may be determined in an efficient and precise manner. The offset data may be directly applied for adjusting the operation of the one or more assembly robots 110, thereby achieving and maintaining a high level of assembly quality.

A measurement point 132 may be described by coordinates within a part coordinate system 134 relative to a part reference point 133. The part reference point 133 may be located closer to the assembled part 105 than a general product reference point 103 of a product coordinate system 104 which is used for describing the position of various different parts 105 within a product 100. In particular, the part reference point 133 may be located within the assembled part 105, notably at a midpoint and/or a center of gravity of the assembled part 105, in case the assembled part 105 is fixed to the body 101 of the product 100 according to the target pose 106. By making use of coordinates which are relative to a part reference point 133, the offset data may be determined with an increased precision (compared to a situation where the coordinates are provided relative to the product reference point 103).

Deviation data may be determined for $N$ measurement points 132, with $N > 1, 3,$ or 5. Furthermore, a pose of the assembled part 105 may comprise $K$ degrees of freedom, with $K = 3, 4, 5,$ or 6. In such a case, the transformation matrix may be a $N \times K$ matrix, thereby providing the $N$ deviation values $d_n$ from the $K$ components of the pose offset $P$.

$Q_n$, $n = 1, ..., N,$ may be coordinate vectors indicating positions of the $N$ measurement points 132, respectively. The transformation matrix may be dependent on $Q_n$, $n = 1, ..., N$.

Furthermore, $J_n$, $n = 1, ..., N,$ may be partial transformation matrices for the $N$ measurement points 132, respectively. The transformation matrix may be dependent on $J_n$, $n = 1, ..., N,$ wherein $J_n$ may be a $3 \times K$ Matrix. In particular, the partial transformation matrix $J_n$ may be determined as

$$J_n = \left[ \begin{bmatrix} 1 \\ 0 \\ 0 \end{bmatrix} \quad \begin{bmatrix} 0 \\ 1 \\ 0 \end{bmatrix} \quad \begin{bmatrix} 0 \\ 0 \\ 1 \end{bmatrix} \quad \left( \begin{bmatrix} 1 \\ 0 \\ 0 \end{bmatrix} \times Q_n \right) \quad \left( \begin{bmatrix} 0 \\ 1 \\ 0 \end{bmatrix} \times Q_n \right) \quad \left( \begin{bmatrix} 0 \\ 0 \\ 1 \end{bmatrix} \times Q_n \right) \right],$$

for $K = 6$, wherein $\times$ is the cross product operator. As a result of this, the offset data may be determined in a precise manner.

$V_n$, n = 1, ... , N, may be vectors indicating the N measurement directions 131, respectively. The vectors $V_n{}^T J_n$ may then indicate a projection of the partial transformation matrix $J_n$ onto the measurement direction 131 which is indicated by $V_n$. The vector $V_n{}^T J_n$ may be a $1 \times K$ vector. The transformation matrix may be dependent on $V_n{}^T J_n$, n = 1, ... , N. As a result of this, the offset data may be determined in a precise manner.

In particular, the transformation matrix may be given by

$$ J = \begin{bmatrix} V_1{}^T J_1 \\ \vdots \\ V_N{}^T J_N \end{bmatrix}. $$

The offset data may be determined based on an estimate of an inverse of the transformation matrix, wherein the estimate of the inverse of the transformation matrix may be denoted as $J^{-1}$. The estimate of the inverse may e.g. by a Moore-Penrose inverse. In this case, the offset data $P$ may be determined from the deviation data $D$ using $P = J^{-1}D$.

A product 100 may comprise a plurality of different parts 105 which are placed at different positions on the body 101 of the product 100. The deviation data for the plurality of different parts 105 may be determined using at least partially different (differently located) measurement points 132. Furthermore, the transformation matrices for determining the offset data for the plurality of different parts 105 may be different from one another. The different transformation matrices may be determined prior to execution of the method 200, thereby enabling a resource efficient execution of the method 200.

The method 200 may comprise determining the offset data for a sequence of different products 100 (of the same product type) that are assembled using the robot 110. Furthermore, the method 200 may comprise determining, based on the offset data for the sequence of different products 100, whether there is a systematic offset of the assembled part 105 from a target pose 106. In particular, it may be determined whether an average of actual poses of the assembled parts 105 differs from the target pose 106 for the part 105 (by more than a predetermined tolerance). If this is the case, it may be determined that a systematic offset occurs. The step of adjusting 203 the operation of the robot 110 may be performed (notably only) if it is determined that there is a systematic offset. By doing this, the efficiency and the precision of the assembly process may be further increased.

Hence, the method 200 may be repeated as indicated by the closed loop in Fig. 2. Consequently, the offset data may be determined for a sequence of parts 105 and/or products 100, in order to continuously and/or repeatedly adjust the assembly process. By doing this, the precision of the assembly process may be increased in a robust manner.

Furthermore, a control unit 150 for controlling an assembly robot 150 which is configured to attach a part 105 onto a body 101 of a product 100, notably a vehicle, is described. The control unit 150 may be configured to determine deviation data at a plurality of measurement points 132 of an already assembled part 105. The deviation data may indicate for each measurement point 132 a deviation in a measurement direction 131 from a target position of the measurement point 132. Furthermore, the control unit 150 may be configured to determine offset data based on the deviation data and based on a transformation matrix for the plurality of measurement points 133 and the plurality of measurement directions 131. In addition, the control unit 150 may be configured to adjust operation of the robot 110 for assembling a subsequent part 105 based on the offset data, notably in order to reduce the deviation for at least one of the measurement points 132 and/or such that the deviation for at least one of the measurement points 132 is reduced.

## Claims

1. A method (200) for controlling an assembly step of a part (105) onto a body (101) of a product (100), which is performed by a robot (110); wherein the method (200) comprises,

   - determining (201) deviation data at a plurality of measurement points (132) of an already assembled part (105); wherein the deviation data indicates for each measurement point (132) a deviation in a measurement direction (131) from a target position of the measurement point (132); wherein the measurement directions (131) at least partially differ for the different measurement points (132);
   - determining (202) offset data based on the deviation data and based on a transformation matrix for the plurality of measurement points (133) and the plurality of measurement directions (131); and
   - adjusting (203) operation of the robot (110) for assembling a subsequent part (105) based on the offset data, in order to reduce the deviation for at least one of the measurement points (132).

2. The method (200) of claim 1, wherein

   - the transformation matrix comprises a Jacobian matrix; and/or

- the transformation matrix is configured to determine a deviation in a measurement direction (131) at a measurement point (132) caused by a pose offset of the part (105) relative to a target pose (106) of the part (105); wherein the target position of the measurement point (132) dependents on the target pose; and/or
- the transformation matrix is dependent on coordinates of the plurality of measurement points (132) and on the plurality of measurement directions (131).

3. The method (200) of any previous claim, wherein

- a measurement point (132) is described by coordinates within a part coordinate system (134) relative to a part reference point (133);
- the part reference point (133) is located closer to the assembled part (105) than a general product reference point (103) of a product coordinate system (104) which is used to describe the position of various different parts (105) within a product (100); and/or
- the part reference point (133) is located within the assembled part (105), notably at a midpoint and/or a center of gravity of the assembled part (105), in case the assembled part (105) is fixed to the body (101) of the product (100) according to a target pose (106).

4. The method (200) of any previous claim, wherein

- deviation data is determined for $N$ measurement points (132), with $N > 1,3$, or 5;
- a pose of the assembled part (105) comprises $K$ degrees of freedom, with $K = 3,4,5$, or 6; and
- the transformation matrix is a $N \times K$ matrix.

5. The method (200) of claim 4, wherein

- $Q_n, n = 1, ..., N,$ are coordinate vectors indicating positions of the $N$ measurement points (132), respectively; and
- the transformation matrix is dependent on $Q_n, n = 1, ..., N.$

6. The method (200) of claim 5, wherein

- $J_n, n = 1, ..., N,$ are partial transformation matrices for the $N$ measurement points (132), respectively;
- the transformation matrix is dependent on $J_n, n = 1, ... ,N$;
- $J_n$ is a $3 \times K$ Matrix; and

- notably $J_n = \begin{bmatrix} \begin{bmatrix} 1 \\ 0 \\ 0 \end{bmatrix} & \begin{bmatrix} 0 \\ 1 \\ 0 \end{bmatrix} & \begin{bmatrix} 0 \\ 0 \\ 1 \end{bmatrix} & \left( \begin{bmatrix} 1 \\ 0 \\ 0 \end{bmatrix} \times Q_n \right) & \left( \begin{bmatrix} 0 \\ 1 \\ 0 \end{bmatrix} \times Q_n \right) & \left( \begin{bmatrix} 0 \\ 0 \\ 1 \end{bmatrix} \times Q_n \right) \end{bmatrix}$, for $K = 6$; and
- $\times$ is the cross product operator.

7. The method (200) of claim 6, wherein

- $V_n, n = 1, ..., N,$ are vectors indicating the $N$ measurement directions (131), respectively;
- $V_n^T J_n$ indicates a projection of the partial transformation matrix $J_n$ onto the measurement direction (131) indicated by $V_n$;
- $V_n^T J_n$ is a $1 \times K$ vector; and
- the transformation matrix is dependent on $V_n^T J_n, n = 1, ..., N.$

8. The method (200) of claim 7, wherein the transformation matrix is given by

$$J = \begin{bmatrix} V_1{}^T J_1 \\ \vdots \\ V_N{}^T J_N \end{bmatrix},$$

and

- $J$ is a $N \times K$ matrix.

9. The method (200) of any previous claim, wherein the offset data is determined based on an estimate of an inverse of the transformation matrix.

10. The method (200) of any previous claim, wherein

- a product (100) comprises a plurality of different parts (105);
- the deviation data for the plurality of different parts (105) is determined using at least partially different measurement points (132); and
- the transformation matrices for determining the offset data for the plurality of different parts (105) are different from one another.

11. The method (200) of any previous claim, wherein the deviation data comprises coordinate measuring machine (CMM) measurement data.

12. The method (200) of any previous claim, wherein the method (200) comprises

- determining the offset data for a sequence of different products (100) that are assembled using the robot (110);
- determining, based on the offset data for the sequence of different products (100), whether there is a systematic offset of the assembled part (105) from a target pose (106); and
- adjusting (203) the operation of the robot (110), notably only, if it is determined that there is a systematic offset.

13. The method (200) of any previous claim, wherein adjusting (203) the operation of the robot (110) comprises,

- adjusting a movement trajectory of the robot (110) when assembling a part (105); and/or
- adjusting, notably rotating and/or translating, a coordinate system (124) used by the robot (110) when assembling a part (105).

14. The method (200) of any previous claim, wherein the product (100) is a vehicle or a component of a vehicle.

15. A control unit (150) for controlling an assembly robot (150) which is configured to attach a part (105) onto a body (101) of a product (100); wherein the control unit (150) is configured to

- determine deviation data at a plurality of measurement points (132) of an already assembled part (105); wherein the deviation data indicates for each measurement point (132) a deviation in a measurement direction (131) from a target position of the measurement point (132);
- determine offset data based on the deviation data and based on a transformation matrix for the plurality of measurement points (133) and the plurality of measurement directions (131); and
- adjust operation of the robot (110) for assembling a subsequent part (105) based on the offset data, in order to reduce the deviation for at least one of the measurement points (132).

**Patentansprüche**

1. Verfahren (200) zum Steuern eines Montageschritts einer Komponente (105) auf einen Körper (101) eines Erzeugnisses (100), der durch einen Roboter (110) durchgeführt wird; wobei das Verfahren (200) Folgendes umfasst:

- Bestimmen (201) von Abweichungsdaten an mehreren Messpunkten (132) einer bereits montierten Komponente (105); wobei die Abweichungsdaten für jeden Messpunkt (132) eine Abweichung einer Messrichtung (131) von einer Sollposition des Messpunktes (132) angeben; wobei sich die Messrichtungen (131) für die verschiedenen Messpunkte (132) zumindest teilweise unterscheiden;
- Bestimmen (202) von Versatzdaten auf der Grundlage der Abweichungsdaten und auf der Grundlage einer Transformationsmatrix für die mehreren Messpunkte (133) und die mehreren Messrichtungen (131); und
- Einstellen (203) des Betriebs des Roboters (110) zum Montieren einer nachfolgenden Komponente (105) auf der Grundlage der Versatzdaten, um die Abweichung für mindestens einen der Messpunkte (132) zu verringern.

2. Verfahren (200) nach Anspruch 1, wobei

- die Transformationsmatrix eine Jacobimatrix umfasst; und/oder

- die Transformationsmatrix konfiguriert ist, eine Abweichung einer Messrichtung (131) an einem Messpunkt (132), die durch einen Stellungsversatz der Komponente (105) in Bezug auf eine Sollstellung (106) der Komponente (105) bewirkt wird, zu bestimmen; wobei die Sollposition des Messpunktes (132) von der Sollstellung abhängt; and/oder
- die Transformationsmatrix von den Koordinaten der mehreren Messpunkte (132) und von den mehreren Messrichtungen (131) abhängt.

3. Verfahren (200) nach einem der vorhergehenden Ansprüche, wobei

- ein Messpunkt (132) durch Koordinaten in einem Komponentenkoordinatensystem (134) in Bezug auf einen Komponentenreferenzpunkt (133) beschrieben wird;
- der Komponentenreferenzpunkt (133) näher an der montierten Komponente (105) angeordnet ist als ein allgemeiner Erzeugnisreferenzpunkt (103) eines Erzeugniskoordinatensystems (104), das verwendet wird, um die Position diverser verschiedener Komponenten (105) in einem Erzeugnis (100) zu beschreiben; und/oder
- der Komponentenreferenzpunkt (133) in der montierten Komponente (105), insbesondere an einem Mittelpunkt und/oder einem Schwerpunkt der montierten Komponente (105), angeordnet ist, wenn die montierte Komponente (105) gemäß einer Sollstellung (106) am Körper (101) des Erzeugnisses (100) befestigt ist.

4. Verfahren (200) nach einem der vorhergehenden Ansprüche, wobei

- Abweichungsdaten für N Messpunkte (132) bestimmt werden, wobei N > 1, 3 oder 5;
- eine Stellung der montierten Komponente (105) K Freiheitsgrade umfasst, wobei K = 3, 4, 5 oder 6; und
- die Transformationsmatrix eine N $\times$ K-Matrix ist.

5. Verfahren (200) nach Anspruch 4, wobei

- $Q_n$, $n = 1,..., N,$ Koordinatenvektoren sind, die jeweils Positionen der $N$ Messpunkte (132) angeben; und
- die Transformationsmatrix von $Q_n$, $n = 1,..., N,$ abhängt.

6. Verfahren (200) nach Anspruch 5, wobei

- $J_n$, $n = 1,..., N,$ jeweils Teiltransformationsmatrizen für die $N$ Messpunkte (132) sind;
- die Transformationsmatrix von $J_n$, $n = 1,..., N,$ abhängt;
- $J_n$ eine 3 $\times$ $K$-Matrix ist; und

- insbesondere $J_n = \left[ \begin{bmatrix} 1 \\ 0 \\ 0 \end{bmatrix} \quad \begin{bmatrix} 0 \\ 1 \\ 0 \end{bmatrix} \quad \begin{bmatrix} 0 \\ 0 \\ 1 \end{bmatrix} \quad \left( \begin{bmatrix} 1 \\ 0 \\ 0 \end{bmatrix} \times Q_n \right) \quad \left( \begin{bmatrix} 0 \\ 1 \\ 0 \end{bmatrix} \times Q_n \right) \quad \left( \begin{bmatrix} 0 \\ 0 \\ 1 \end{bmatrix} \times Q_n \right) \right]$, für $K = 6$; und
- $\times$ der Kreuzproduktoperator ist.

7. Verfahren (200) nach Anspruch 6, wobei

- $V_n$, $n = 1,..., N,$ Vektoren sind, die jeweils die $N$ Messrichtungen (131) angeben;
- $V_n^T J_n$ eine Projektion der Teiltransformationsmatrix $J_n$ auf die Messrichtung (131), die durch $V_n$ angegeben wird, angibt;
- $V_n^T J_n$ ein 1 $\times$ $K$-Vektor ist; und
- die Transformationsmatrix von $V_n^T J_n$, $n = 1,..., N,$ abhängt.

8. Verfahren (200) nach Anspruch 7, wobei die Transformationsmatrix gegeben ist durch

$$J = \begin{bmatrix} V_1^T J_1 \\ \vdots \\ V_N^T J_N \end{bmatrix},$$

und

- *J* eine $N \times K$-Matrix ist.

9. Verfahren (200) nach einem der vorhergehenden Ansprüche, wobei die Versatzdaten auf der Grundlage eines Schätzwertes einer Inversen der Transformationsmatrix bestimmt werden.

10. Verfahren (200) nach einem der vorhergehenden Ansprüche, wobei

- ein Erzeugnis (100) mehrere verschiedene Komponenten (105) umfasst;
- die Abweichungsdaten für die mehreren verschiedenen Komponenten (105) unter Verwendung zumindest teilweise verschiedener Messpunkte (132) bestimmt werden; und
- die Transformationsmatrizen zum Bestimmen der Versatzdaten für die mehreren verschiedenen Komponenten (105) voneinander verschieden sind.

11. Verfahren (200) nach einem der vorhergehenden Ansprüche, wobei die Abweichungsdaten Messdaten einer Koordinatenmessmaschine (CMM) umfassen.

12. Verfahren (200) nach einem der vorhergehenden Ansprüche, wobei das Verfahren (200) Folgendes umfasst:

- Bestimmen der Versatzdaten für eine Abfolge verschiedener Erzeugnisse (100), die unter Verwendung des Roboters (110) montiert werden;
- Bestimmen auf der Grundlage der Versatzdaten für die Abfolge verschiedener Erzeugnisse (100), ob es einen systematischen Versatz der montierten Komponente (105) von einer Sollstellung (106) gibt; und
- Einstellen (203) des Betriebs des Roboters (110), insbesondere lediglich dann, wenn bestimmt wird, dass es einen systematischen Versatz gibt.

13. Verfahren (200) nach einem der vorhergehenden Ansprüche, wobei das Einstellen (203) des Betriebs des Roboters (110) Folgendes umfasst:

- Einstellen einer Bewegungsbahn des Roboters (110), wenn eine Komponente (105) montiert wird; und/oder
- Einstellen, insbesondere Drehen und/oder translatorisch Bewegen, eines Koordinatensystems (124), das durch den Roboter (110) verwendet wird, wenn eine Komponente (105) montiert wird.

14. Verfahren (200) nach einem der vorhergehenden Ansprüche, wobei das Erzeugnis (100) ein Fahrzeug oder eine Komponente eines Fahrzeugs ist.

15. Steuereinheit (150) zum Steuern eines Montageroboters (150), der konfiguriert ist, eine Komponente (105) auf einem Körper (101) eines Erzeugnisses (100) anzubringen; wobei die Steuereinheit (150) konfiguriert ist zum:

- Bestimmen von Abweichungsdaten an mehreren Messpunkten (132) einer bereits montierten Komponente (105); wobei die Abweichungsdaten für jeden Messpunkt (132) eine Abweichung einer Messrichtung (131) von einer Sollposition des Messpunktes (132) angeben;
- Bestimmen von Versatzdaten auf der Grundlage der Abweichungsdaten und auf der Grundlage einer Transformationsmatrix für die mehreren Messpunkte (133) und die mehreren Messrichtungen (131); und
- Einstellen des Betriebs des Roboters (110) zum Montieren einer nachfolgenden Komponente (105) auf der Grundlage der Versatzdaten, um die Abweichung für mindestens einen der Messpunkte (132) zu verringern.

**Revendications**

1. Procédé (200) pour contrôler une étape d'assemblage d'une pièce (105) sur le corps (101) d'un produit (100), qui est effectuée par un robot (110) ; le procédé (200) comprenant les étapes suivantes :

- déterminer (201) des données de déviation au niveau d'une pluralité de points de mesure (132) d'une pièce déjà assemblée (105) ; les données de déviation indiquant pour chaque point de mesure (132) une déviation dans une direction de mesure (131) par rapport à une position cible du point de mesure (132) ; les directions de mesure (131) différant au moins partiellement pour les différents points de mesure (132) ;
- déterminer (202) des données de décalage sur la base des données de déviation et sur la base d'une matrice de transformation pour la pluralité de points de mesure (133) et la pluralité de directions de mesure (131) ; et

- ajuster (203) le fonctionnement du robot (110) pour assembler une pièce suivante (105) sur la base des données de décalage, afin de réduire la déviation pour au moins l'un des points de mesure (132).

2. Procédé (200) selon la revendication 1, dans lequel

  - la matrice de transformation comprend une matrice jacobienne ; et/ou
  - la matrice de transformation est configurée pour déterminer une déviation dans une direction de mesure (131) au niveau d'un point de mesure (132) causée par un décalage de pose de la pièce (105) par rapport à une pose cible (106) de la pièce (105) ; où la position cible du point de mesure (132) dépend de la pose cible ; et/ou
  - la matrice de transformation dépend des coordonnées de la pluralité de points de mesure (132) et de la pluralité de directions de mesure (131).

3. Procédé (200) selon l'une quelconque des revendications précédentes, dans lequel

  - un point de mesure (132) est décrit par des coordonnées dans un système de coordonnées de pièce (134) par rapport à un point de référence de la pièce (133) ;
  - le point de référence de la pièce (133) est situé plus près de la pièce assemblée (105) qu'un point de référence général du produit (103) d'un système de coordonnées du produit (104) qui est utilisé pour décrire la position de différentes pièces (105) au sein d'un produit (100) ; et/ou
  - le point de référence de la pièce (133) est situé à l'intérieur de la pièce assemblée (105), notamment en un point médian et/ou un centre de gravité de la pièce assemblée (105), dans le cas où la pièce assemblée (105) est fixée au corps (101) du produit (100) selon une position cible (106).

4. Procédé (200) selon l'une quelconque des revendications précédentes, dans lequel

  - des données de déviation sont déterminées pour $N$ points de mesure (132), avec $N > 1$, 3 ou 5 ;
  - une position de la pièce assemblée (105) comprend $K$ degrés de liberté, avec $K = 3$, 4, 5 ou 6 ; et
  - la matrice de transformation est une matrice $N \times K$.

5. Procédé (200) selon la revendication 4, dans lequel

  - $Q_n$, $n = 1,..., N$, sont des vecteurs de coordonnées indiquant respectivement les positions des $N$ points de mesure (132) ; et
  - la matrice de transformation dépend de $Q_n$, $n = 1,..., N$.

6. Procédé (200) selon la revendication 5, dans lequel

  - $J_n$, $n = 1,..., N$, sont des matrices de transformation partielle pour les $N$ points de mesure (132), respectivement ;
  - la matrice de transformation dépend de $J_n$, $n = 1,..., N$ ;
  - $J_n$ est une matrice $3 \times K$ ; et
  - notamment $J_n = \left[ \begin{bmatrix} 1 \\ 0 \\ 0 \end{bmatrix} \begin{bmatrix} 0 \\ 1 \\ 0 \end{bmatrix} \begin{bmatrix} 0 \\ 0 \\ 1 \end{bmatrix} \left( \begin{bmatrix} 1 \\ 0 \\ 0 \end{bmatrix} \times Q_n \right) \left( \begin{bmatrix} 0 \\ 1 \\ 0 \end{bmatrix} \times Q_n \right) \left( \begin{bmatrix} 0 \\ 0 \\ 1 \end{bmatrix} \times Q_n \right) \right]$, pour $K = 6$ ; et
  - $\times$ est l'opérateur produit vectoriel.

7. Procédé (200) selon la revendication 6, dans lequel

  - $V_n$, $n = 1,..., N$, sont des vecteurs indiquant respectivement les $N$ directions de mesure (131) ;
  - $V_n^T J_n$ indique une projection de la matrice de transformation partielle $J_n$ sur la direction de mesure (131) indiquée par $V_n$ ;
  - $V_n^T J_n$ est un vecteur $1 \times K$ ; et
  - la matrice de transformation dépend de $V_n^T J_n$, $n = 1,..., N$.

8. Procédé (200) selon la revendication 7, dans lequel la matrice de transformation est donnée par

$$J = \begin{bmatrix} V_1{}^T J_1 \\ \vdots \\ V_N{}^T J_N \end{bmatrix},$$

et

- $J$ est une matrice $N \times K$.

9. Procédé (200) selon l'une quelconque des revendications précédentes, dans lequel les données de décalage sont déterminées sur la base d'une estimation de l'inverse de la matrice de transformation.

10. Procédé (200) selon l'une quelconque des revendications précédentes, dans lequel

- un produit (100) comprend une pluralité de pièces différentes (105) ;
- les données de déviation pour la pluralité de pièces différentes (105) sont déterminées à l'aide de points de mesure (132) au moins partiellement différents ; et
- les matrices de transformation pour déterminer les données de décalage pour la pluralité de pièces différentes (105) sont différentes les unes des autres.

11. Procédé (200) selon l'une quelconque des revendications précédentes, dans lequel les données de déviation comprennent des données de mesure d'une machine à mesurer tridimensionnelle (CMM).

12. Procédé (200) selon l'une quelconque des revendications précédentes, dans lequel le procédé (200) comprend les étapes suivantes

- déterminer les données de décalage pour une séquence de différents produits (100) qui sont assemblés à l'aide du robot (110) ;
- déterminer, sur la base des données de décalage pour la séquence de différents produits (100), s'il existe un décalage systématique de la pièce assemblée (105) par rapport à une position cible (106) ; et
- ajuster (203) le fonctionnement du robot (110), notamment uniquement s'il est déterminé qu'il existe un décalage systématique.

13. Procédé (200) selon l'une quelconque des revendications précédentes, dans lequel l'ajustement (203) du fonctionnement du robot (110) comprend les étapes suivantes

- ajuster une trajectoire de mouvement du robot (110) lors de l'assemblage d'une pièce (105) ; et/ou
- ajuster, notamment en rotation et/ou en translation, un système de coordonnées (124) utilisé par le robot (110) lors de l'assemblage d'une pièce (105).

14. Procédé (200) selon l'une quelconque des revendications précédentes, dans lequel le produit (100) est un véhicule ou un composant de véhicule.

15. Unité de commande (150) pour commander un robot d'assemblage (150) qui est configuré pour fixer une pièce (105) sur le corps (101) d'un produit (100) ; l'unité de commande (150) étant configurée pour :

- déterminer des données de déviation au niveau d'une pluralité de points de mesure (132) d'une pièce déjà assemblée (105) ; les données de déviation indiquant pour chaque point de mesure (132) une déviation dans une direction de mesure (131) par rapport à une position cible du point de mesure (132) ;
- déterminer des données de décalage sur la base des données de déviation et sur la base d'une matrice de transformation pour la pluralité de points de mesure (133) et la pluralité de directions de mesure (131) ; et
- ajuster le fonctionnement du robot (110) pour assembler une pièce suivante (105) sur la base des données de décalage, afin de réduire la déviation pour au moins l'un des points de mesure (132).

**Fig. 1a**

**Fig. 1b**

**Fig. 1c**

200

determine deviation data of a plurality of measurement points in a plurality of measurement directions for a part mounted to a product ~201

determine offset data based on the deviation data and based on a transformation matrix for the plurality of measurement points and the plurality of measurement directions ~202

adjust the mounting process for mounting a part to a subsequent product using the offset data ~203

**Fig. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2767370 A1

- US 2014257542 A1

**Non-patent literature cited in the description**

- Adaptive robotic assembly of compliant aero-structure components. **JAYAWEERA N.** ; **WEBB P.** Robotics and Computer-Integrated Manufacturing. Elsevier Ltd, April 2007